# EUROPEAN PATENT SPECIFICATION

(11) **EP 3 863 417 B1**
(45) Date of publication and mention of the grant of the patent: **04.12.2024**
(21) Application number: 19870306.8
(22) Date of filing: 07.10.2019
(51) Int. Cl.: A23G 9/04, A23G 9/28, A47J 43/04, F25C 1/20, F25D 3/08, A23G 9/22

(54) **SLUSH BEVERAGE DISPENSER AND SLUSH BEVERAGE DISPENSING METHODS**
SLUSH-GETRÄNKESPENDER UND VERFAHREN ZUR AUSGABE EINES SLUSH-GETRÄNKS
DISTRIBUTEUR DE GRANITÉ ET PROCÉDÉS DE DISTRIBUTION DE GRANITÉ

(30) Priority: 08.10.2018 IN 201841038006
(43) Date of publication of application: 18.08.2021
(73) Proprietor: PepsiCo, Inc., Purchase, New York 10577 (US)
(72) Inventor: DESHPANDE, Prashant, Gurgaon, Haryana 122018 (IN); BHUTANI, Gurmeet, Gurgaon, Haryana 122001 (IN); BROOKS, Byron, Ridgefield, Connecticut 06877 (US); KELLY, Brian, Scotch Plains, New Jersey 07076 (US)
(74) Representative: Maiwald GmbH
(86) International application number: PCT/US2019/054946
(87) International publication number: WO 2020/076674

(56) References cited:
- EP-B1- 1 171 852
- WO-A1-2020/197831
- WO-A1-2020/205877
- GB-A- 2 402 995
- KR-B1- 101 019 879
- US-A- 3 359 748
- US-A1- 2007 012 066
- US-A1- 2009 101 614
- US-A1- 2010 242 497
- US-A1- 2014 263 415
- US-A1- 2015 206 373
- US-A1- 2015 264 968
- US-A1- 2018 120 023
- US-A1- 2018 180 353
- US-A1- 2018 310 589
- US-A1- 2018 310 589

## Description

### FIELD

Embodiments described herein generally relate to methods and devices for dispensing slush beverages. Specifically, embodiments described herein relate to slush beverage dispensers and methods for automatically dispensing beverage containers containing slush beverages.

### BACKGROUND

Vending machines are commonly used to dispense canned or bottled beverages to consumers in an on-demand fashion at various locations, such as grocery stores, convenience stores, shopping malls, sporting or concert venues, gas stations, offices, and movie theaters, among others. While conventional vending machines may provide consumers with a convenient means for purchasing a beverage, vending machines have a number of drawbacks. Conventional vending machines are commonly used for storing and dispensing liquid beverages, and do not offer bottled or canned slush beverages. The liquid beverages are stored in a refrigerated area in the vending machine to maintain the stored beverages at a cool temperature. However, once a beverage is dispensed, the beverage can quickly become warm, which negatively impacts the taste of the beverage. While some consumers may choose to add ice to their beverage to maintain the beverage at a cool temperature, the beverage can become diluted as the ice melts, which is also undesirable. Further, conventional vending machines do not generally provide a unique or interesting consumer experience and simply dispense a beverage to an area accessible by a consumer. As a result, there may be little incentive for a consumer to purchase additional beverages from the vending machine or revisit a particular vending machine.

Therefore, a continuing need exists for methods and dispensers for automatically providing a slush beverage to a consumer upon the consumer's selection of a beverage without further manual intervention by the consumer. Further, there is a continuing need for a slush beverage dispenser that is easy-to-use and that provides a unique and entertaining experience.

US 2015/206373 A1 discloses a beverage vending machine and method for controlling temperature of a vending machine.

GB 2 4402 995 A discloses a method for batch freezing liquid product.

### BRIEF SUMMARY OF THE INVENTION

Some embodiments are directed to a method for providing a slush beverage to a consumer, including storing in a temperature regulated compartment a beverage container containing a beverage at a predetermined temperature at or below a freezing point of the beverage without consumer access to the beverage container; receiving a consumer selection for a beverage; based on the consumer selection, agitating the beverage container such that the beverage within the beverage container undergoes nucleation; and providing the beverage container to the consumer.

Some embodiments are directed to a method for providing a slush beverage to a consumer, including receiving a consumer selection for a beverage that is stored at a temperature at or below a freezing point of the beverage; based on the consumer selection, agitating the beverage so that the beverage without intervention by a consumer undergoes nucleation; and providing the beverage to a consumer.

Some embodiments are directed to a slush beverage dispenser, including a housing; a temperature regulated compartment within the housing configured to store one or more beverage containers such that the one or more beverage containers are not accessible by a consumer, wherein the temperature regulated compartment includes an inlet and an outlet; a cooling system for maintaining the temperature regulated compartment at a first predetermined temperature at or below a freezing point of a beverage within the one or more beverage containers; an agitator disposed at the outlet of the temperature regulated compartment that is configured to cause a beverage within the one or more beverage containers to undergo nucleation; and a delivery portal operatively connected to the agitator for providing the beverage container to the consumer.

In any of the various embodiments discussed herein, a beverage container may be stored at a temperature of about -2°C to about -12°C.

In any of the various embodiments discussed herein, a beverage container may be agitated by subjecting the beverage container to a mechanical impact. According to claim 1, the beverage container is agitated by subjecting the beverage container to a controlled gravitational drop.

In any of the various embodiments discussed herein, a beverage container may be provided to the user by moving the beverage container from the temperature regulated compartment to an area exterior to the temperature regulated compartment that is accessible by a consumer.

In any of the various embodiments discussed herein, the slush beverage dispenser may include accepting a payment by a consumer prior to providing the beverage container to the consumer.

The slush beverage dispenser further includes a user interface configured to receive a user input, wherein the slush beverage dispenser selectively dispenses a beverage container based upon the user input.

In any of the various embodiments discussed herein, the temperature regulated compartment may include a passageway configured to sequentially guide one or more beverage containers from the inlet to the outlet of the temperature regulated compartment. In some embodiments, the passageway may be defined by a plurality of shelves that are spaced from one another.

In any of the various embodiments discussed herein, the slush beverage dispenser may further include a counter within the temperature regulated compartment for tracking a quantity of beverage containers held within the temperature regulated compartment.

In any of the various embodiments discussed herein, the temperature regulated compartment may include a first zone maintained at a first predetermined temperature, and a second zone maintained at a second predetermined temperature, wherein the first predetermined temperature is lower than the second predetermined temperature. In some embodiments, the first zone and the second zone of the temperature regulated compartment may be separated by an insulated divider.

In any of the various embodiments discussed herein, the housing of the slush beverage dispenser may include a base, one or more sidewalls, and an upper wall, defining an interior volume in which the temperature regulated compartment is positioned, and the delivery portal is positioned on the one or more sidewalls. In some embodiments, the housing may further include a selectively openable lid movable between an open configuration and a closed configuration, such that an inlet of the temperature regulated compartment is accessible when the selectively openable lid is in an open configuration and the inlet is inaccessible when the selectively openable lid is in a closed configuration.

The agitator includes a chute configured to subject the beverage container to a gravitational drop onto a platform. The chute may be configured to allow a beverage container to slide thereon so as so as to cause a controlled gravitational drop of the beverage container onto the platform. In some embodiments, the chute includes a first portion that is inclined relative to a horizontal axis, a second portion that is arranged perpendicularly to the horizontal axis, and a shoulder region that is rounded and connects the first portion to the second portion.

In any of the various embodiments discussed herein, the slush beverage dispenser may include a secondary temperature regulated compartment within the housing and that is configured to store one or more beverage containers such that the one or more beverage containers are not accessible by a consumer.

### BRIEF DESCRIPTION OF THE DRAWINGS/FIGURES

FIG. 1 shows a perspective view of a slush beverage dispenser according to embodiments.
FIG. 2 shows a perspective view of an upper end of a slush beverage dispenser having a lid in an open configuration according to embodiments.
FIG. 3 shows a user interface of a slush beverage dispenser according to embodiments.
FIG. 4 shows a longitudinal cross sectional view of a slush beverage dispenser according to embodiments.
FIG. 5 shows a longitudinal cross sectional view of the temperature regulated compartment of a slush beverage dispenser according to embodiments.
FIG. 6 shows a rear view of a temperature regulated compartment according to embodiments.
FIG. 7 shows a front view of a temperature regulated compartment and agitator according to embodiments.
FIG. 8 shows a perspective view of an agitator of a slush beverage dispenser according to embodiments.
FIG. 9 shows a side view of a distributor of a slush beverage dispenser according to embodiments.
FIG. 10 shows a view of a slush beverage dispenser providing a dispensing effect according to embodiments.
FIG. 11 shows a block diagram of the components of a slush beverage dispenser according to embodiments.

### DETAILED DESCRIPTION OF THE INVENTION

The present invention(s) will now be described in detail with reference to embodiments thereof as illustrated in the accompanying drawings. References to "one embodiment," "an embodiment," "an exemplary embodiment," etc., indicate that the embodiment described may include a particular feature, structure, or characteristic, but every embodiment may not necessarily include the particular feature, structure or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

Consumers may choose to purchase a packaged beverage, such as a bottled or canned beverage, rather than a fountain or draft beverage for a variety of reasons. Packaged beverages remain sealed until the consumer desires to open the beverage for consumption, and in many cases, the beverage can be resealed once opened. Thus, packaged beverages have improved portability relative to fountain or draft beverages which are often dispensed into cups. Additionally, some consumers may prefer the experience of drinking directly from a can or bottle rather than drinking from a plastic or paper cup.

However, packaged beverages are generally limited to liquid beverages, and packaged beverages do not commonly contain slush beverages. Slush beverages can be desirable where the consumer wishes to enjoy a cool and refreshing beverage with a unique texture. A slush beverage may remain cool for a longer period of time than a beverage that has simply been refrigerated. As the slush beverage is itself partially frozen, the slush beverage is not diluted when the frozen portion of the slush beverage melts.

Conventional vending machines generally dispense cold beverages, but generally do not dispense slush beverages. While some beverage dispensers are known that dispense slush beverages to consumers, such beverage dispensers generally require the consumer to carry out one or more steps of the dispensing process. The consumer may be required to select and manually retrieve a beverage or beverage container and place the beverage or beverage container in a particular location for the beverage container to be filled or for the beverage container to be chilled or frozen. The consumer may be required to perform additional tasks to carry out the steps of the dispensing process, such as manually shaking the beverage and/or actuating a lever or button to proceed with the dispensing process. Requiring the user to follow a series of steps in order to dispense the slush beverage may be viewed as time consuming and inconvenient, which may give the consumer a negative impression of the beverage dispenser. Requiring the user to manually perform various steps of the dispensing process also introduces the possibility of user error. The beverage dispenser may not function optimally if the steps of the process are not properly executed by the consumer. If the dispensing device does not function correctly, and fails to dispense a slush beverage, the consumer is likely to have a bad experience and may be unlikely to purchase additional beverages from the beverage dispenser.

Additionally, many conventional beverage dispensers and vending machines simply dispense a beverage for access by the consumer. Such beverage dispensers are purely functional and do not provide an entertaining or unique experience to entice the consumer to purchase additional beverages or return to the beverage dispenser after the initial beverage purchase. As a result, the consumer may have little incentive to return to a particular beverage dispenser and may instead choose to purchase beverages from other dispensers or stores.

Providing a slush beverage in a beverage container, such as a glass or plastic bottle or a can, is desirable to combine the convenience of a packaged beverage with the taste and experience of a slush beverage. Further, if the beverage dispenser allows the consumer to witness the process of a beverage changing from a liquid into a partially-frozen slush, the consumer can be provided with a unique experience. The unique experience may encourage or entice the consumer to purchase additional beverages and may cause the consumer to choose to use the slush beverage dispenser over competing beverage dispensers.

In some embodiments, slush beverage dispensers discussed herein automatically dispense a slush beverage to a consumer. In some embodiments, the slush beverage dispensers discussed herein automatically dispense a beverage container containing a slush beverage to a consumer upon receipt of a user input without further intervention by the consumer. Eliminating the need for the consumer to carry out steps of a process for preparing and dispensing a slush beverage can provide an intuitive and customer-friendly experience that reliably provides a slush beverage to the consumer.

In some embodiments, a slush beverage dispenser 100 includes a housing 110 containing a temperature regulated compartment 140 for storing one or more beverage containers 200 at a predetermined temperature such that beverage containers 200 are not accessible by consumers. Slush beverage dispenser 100 further includes an agitator 170 for causing a beverage within a beverage container 200 to undergo nucleation, without the need for manual intervention by the consumer, so as to provide a user with a slush beverage within beverage container 200.

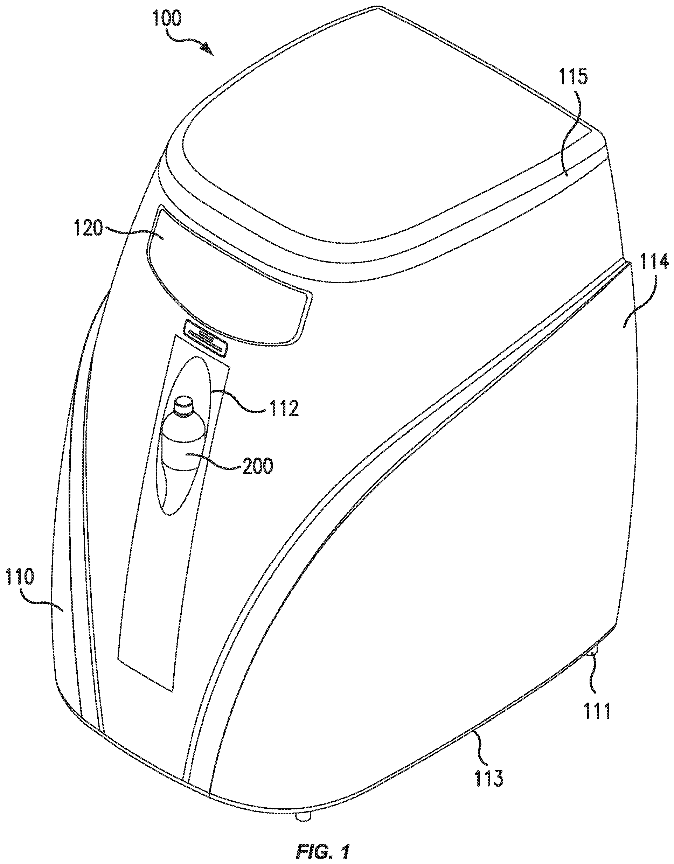

With reference to FIG. 1, a slush beverage dispenser 100 is configured to provide a slush beverage to a consumer. Slush beverage dispenser 100 may be used to dispense any of various types of beverages. As used herein, the term "beverage" includes any consumable free-flowing liquid or semi-liquid product, which may be carbonated or non-carbonated, including but not limited to soft drinks, water, carbonated water, dairy beverages, juices, alcoholic beverages, sports drinks, smoothies, coffee beverages, tea beverages, and milkshakes. The term, "slush beverage" includes any beverage as described herein that is at least partially frozen, such that the beverage is part liquid and part solid.

In embodiments, slush beverage dispenser 100 may be sized and shaped such that it is suited for use as a countertop device. In other embodiments, slush beverage dispenser 100 may be positioned on any of various support surfaces, including a floor, for example. In some embodiments, slush beverage dispenser 100 may be mounted on or integrated with a support structure so that slush beverage dispenser 100 can be used as a stand-alone device. In some embodiments, slush beverage dispenser 100 may be integrated into a wall to provide a wall unit.

Slush beverage dispenser 100 includes a housing 110 including a base 113, one or more sidewalls 114, and an upper wall 115 defining an interior volume. Base 113 is configured to be positioned on a support surface, such as a countertop. Base 113 may include one or more feet 111 for contacting the support surface and stably maintaining slush beverage dispenser 100 at a desired location.

Housing 110 of slush beverage dispenser 100 may be formed from any of various materials, including but not limited to metals, such as aluminum or stainless steel, polymer or polymer-based materials, including but not limited to polycarbonate, polyethylene, polypropylene, polyurethane, polyvinyl chloride (PVC), or acrylonitrile butadiene styrene (ABS), or combinations thereof. Housing 110 may be of unitary construction or may be formed as an assembly of subparts. Housing 110 can be formed by molding, such as injection molding, blow molding, or compression molding, among others.

A delivery portal 112 is provided in housing 110 for providing a consumer with access to a dispensed beverage container. In some embodiments, delivery portal 112 is defined by a sidewall 114 of housing 110 and delivery portal 112 can be located in any of various positions on housing 110. Delivery portal 112 may be formed as an opening on housing 110 that allows a beverage container within housing 110 to be accessed by a consumer. In some embodiments, housing 110 may include a door or lid for removably covering delivery portal 112 until the time that a beverage container is dispensed from slush beverage dispenser 100. The housing 110 may define an oval-shaped delivery portal 112 as shown in FIG. 1, however, in embodiments, delivery portal 112 may be formed so as to have any of various shapes, including, but not limited to, square, rectangular, bottle-shaped, cylindrical, can-shaped, and other suitable shapes.

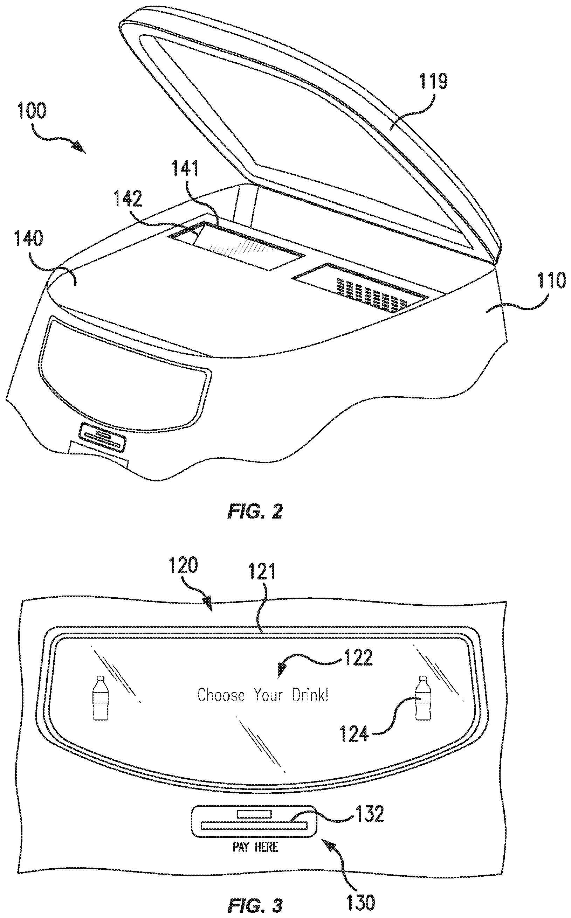

With reference to FIG. 2, in some embodiments, housing 110 of slush beverage dispenser 100 includes a selectively openable lid 119. In some embodiments, upper wall 115 of housing 110 may be or may include selectively openable lid 119. Selectively openable lid 119 is movable between an open configuration and a closed configuration. In the open configuration, an inlet 141 of temperature regulated compartment 140 is accessible, such as for filling or refilling temperature regulated compartment 140 with beverage containers. In the closed configuration, lid 119 covers inlet 141 so that inlet 141 is not accessible by consumers. Preventing access to inlet 141 may help to prevent unauthorized users from attempting to steal a beverage container by removing a beverage container through inlet 141 of temperature regulated compartment 140 or from inserting foreign materials into inlet 141. Lid 119 may be fully removable from housing 110 or may be pivotally connected to housing 110, such as by means of one or more hinges positioned along an edge of lid 119. Lid 119 may further include a locking mechanism, such as a keyed lock, a combination lock or an electronic lock, among other locking devices known in the art so that only authorized individuals can move lid 119 from the closed to the open configuration.

Slush beverage dispenser 100 includes a user interface 120 for receiving a user input, such as a beverage selection, as show for example in FIG. 3. User interface 120 may be positioned on any of various portions of housing 110, such as on a sidewall of housing 110. User interface 120 may include an electronic display screen 121 as shown in FIG. 3. Electronic display screen 121 may be a liquid crystal display (LCD) or a light emitting diode (LED) display, and electronic display screen 121 may be a touch screen display. In embodiments having an electronic display screen 121, electronic display screen 121 is configured to display a graphical user interface 122. However, in alternate embodiments, user interface 120 may be a series of actuators, such as buttons, levers or handles, with each actuator corresponding to a particular beverage. User interface 120 may include an electronic display screen 121 and a graphical user interface 122 that displays information and instructions for the consumer, such as a list of available beverages and optionally payment information and instructions. Where electronic display screen 121 is a touch screen display, graphical user interface 122 may display one or more icons 124 to be selected by the user by pressing a location on electronic display screen 121 at which an icon 124 is displayed. For example, graphical user interface 122 may display a series of icons 124 corresponding to different beverages, and each icon 124 may be an image of a beverage and/or a name or logo of a beverage. Where electronic display screen 121 is not a touch screen display, user interface 120 may further include one or more actuators, such as buttons, levers or handles for allowing a consumer to enter commands and navigate graphical user interface 122 using the actuators. Receipt of the user input by user interface 120 may be configured to initiate dispensing of a beverage container from slush beverage dispenser 100.

In some embodiments, slush beverage dispenser 100 may further include a payment processing system 130. Payment processing system 130 may be separate from or integrated with user interface 120 such that user interface 120 displays information and instructions relating to how payment can be made and the types of payment accepted. Payment processing system 130 may include one or more slots 132 for accepting different types of payment, such as payment with paper money, coins, tokens, debit cards or credit cards. Payment processing system 130 may also include a scanner or reader to allow a user to make a payment using a mobile payment system. In some embodiments, payment processing system 130 may be configured to recognize a cashless payment via a consumer mobile phone, for example. In embodiments payment processing system 130 may comprise a near field communication or radio-frequency identification ("RFID") reader for receiving account information from a consumer mobile phone wirelessly. Slush beverage dispenser 100 may require a consumer to make a payment prior to providing a beverage container to the consumer. In an exemplary embodiment, user interface 120 may prompt the user to make a beverage selection and subsequently make a payment for the selected beverage. Upon receipt and confirmation of a consumer's payment, slush beverage dispenser 100 may initiate dispensing of the beverage container as selected by the consumer.

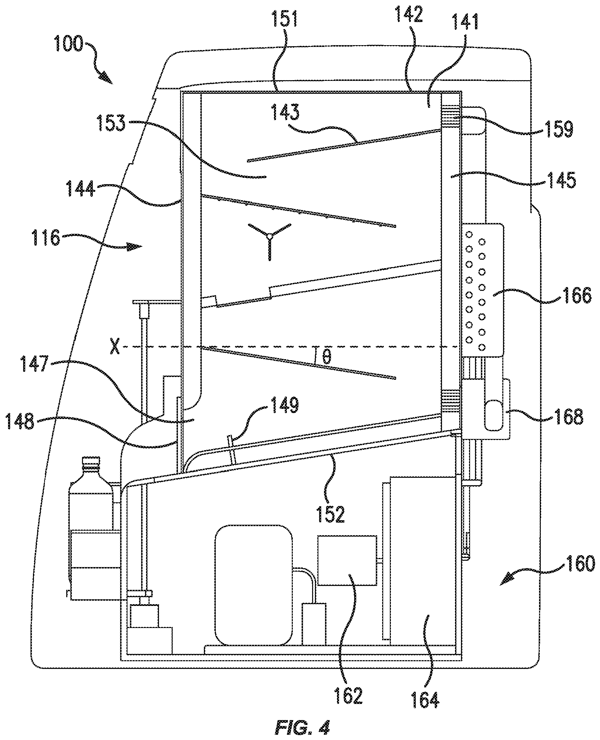

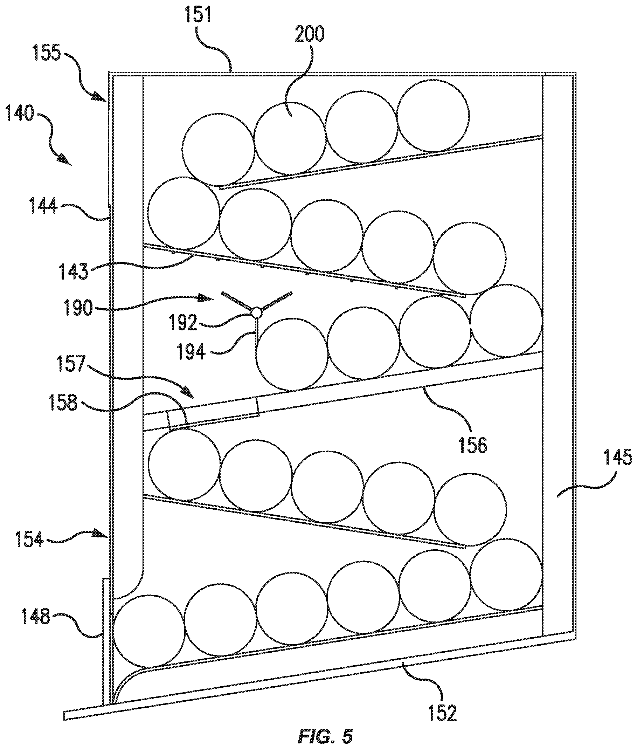

As shown, for example, in FIGs. 4 and 5, a temperature regulated compartment 140 is disposed within an interior volume 116 of housing 110 and is configured to store one or more beverage containers 200 such that beverage containers 200 are inaccessible by consumers. Temperature regulated compartment 140 encloses beverage containers 200 so that they cannot readily be accessed, and temperature regulated compartment 140 is positioned within housing 110, further limiting access to the stored beverage containers 200. Temperature regulated compartment 140 is shown as being shaped substantially as a rectangular prism, however, the temperature regulated compartment 140 may have any of various shapes.

In some embodiments, slush beverage dispenser 100 may include one or more additional secondary temperature regulated compartments 140, such that each temperature regulated compartment 140 is configured for storing a particular beverage. For example, a first temperature regulated compartment 140 can store a first type of beverage, such as a soda, and a second temperature regulated compartment 140 can store a second type of beverage, such as a sports drink, water, or a different type of soda. In this way, a consumer selection of a beverage causes a beverage container to be dispensed from the corresponding temperature regulated compartment in which the selected beverage is stored. Each temperature regulated compartment 140 can have a different predetermined temperature at which any beverage containers therein are stored. Temperature regulated compartment 140 and any secondary temperature regulated compartments 140 may be substantially identical in configuration and operation. Further, temperature regulated compartment 140 and any secondary temperature regulated compartments 140 may be positioned in a side-by-side manner within the housing 110.

While it is understood that slush beverage dispenser 100 may include more than one temperature regulated compartment 140, for simplicity the following discussion will refer to a single temperature regulated compartment 140. Temperature regulated compartment 140 defines an inlet 141 and an outlet 147. In some embodiments, inlet 141 is located at an upper end 151 of temperature regulated compartment 140 and outlet 147 is located at a lower end 152 of temperature regulated compartment 140. Inlet 141 provides access to an interior volume of temperature regulated compartment 140 such that temperature regulated compartment 140 can be filled or refilled with beverage containers 200 by means of the inlet 141. Temperature regulated compartment 140 may optionally include an inlet door 142 for removably covering the inlet 141.

Beverage containers 200 within temperature regulated compartment 140 can exit temperature regulated compartment 140 via outlet 147 so as to move to an area of slush beverage dispenser 100 that is exterior to temperature regulated compartment 140. A beverage container 200 is allowed to exit temperature regulated compartment 140 through outlet 147 upon receipt of a user input by user interface 120 of slush beverage dispenser 100, such that a beverage container is dispensed that corresponds to the user input. In some embodiments, temperature regulated compartment 140 includes an outlet door 148 that removably covers the outlet 147 and which prevents beverage containers 200 within temperature regulated compartment 140 from prematurely exiting compartment 140. In some embodiments, a control unit 128 controls the operations of slush beverage dispenser 100 such as selectively allowing a beverage container 200 to exit temperature regulated compartment 140 via outlet 147.

In some embodiments, temperature regulated compartment 140 is configured for storing beverage containers 200 having a substantially cylindrical configuration, such as a plastic or glass bottle or a can. In some embodiments, cylindrical beverage containers 200 can be stored within temperature regulated compartment 140 in a sideways orientation in which a longitudinal axis of each cylindrical beverage container 200 is parallel to a surface on which beverage containers 200 are positioned so that beverage containers 200 are able to roll on the surface. In other embodiments, beverage containers 200 may be stored in other configurations, such as, vertical configurations, for example.

In an embodiment, temperature regulated compartment 140 defines a passageway 153 that guides beverage containers 200 from inlet 141 to outlet 147 of temperature regulated compartment 140. Passageway 153 guides beverage containers 200 in a sequential manner, such that a first beverage container inserted into passageway 153 is the first beverage container to be dispensed from temperature regulated compartment 140 through outlet 147, and a second beverage container inserted into temperature regulated compartment 140 is the second to be dispensed, and so on. This helps to ensure turnover of beverage containers 200 held within temperature regulated compartment 140.

In embodiments, as shown for example in FIGs. 4-5, passageway 153 is defined by one or more shelves 143. Shelves 143 are spaced from one another from an upper end 151 of temperature regulated compartment 140 towards a lower end 152 of compartment 140. In some embodiments, shelves 143 are spaced at a fixed interval such that a distance between each successive shelf 143 is the same or substantially the same. Each shelf 143 may be substantially planar and may extend from one side of temperature regulated compartment 140 towards an opposing side without reaching the opposing side. Shelves 143 may alternate between originating from a first side 144 of temperature regulated compartment 140 and an opposing second side 145 so that passageway 153 defined thereby has a serpentine configuration. Shelves 143 may be sloped or inclined so as to form an angle, *θ*, with respect to a hypothetical horizontal axis X. In this way, the slope of each shelf 143 allows beverage containers 200 to roll along shelf 143 and towards outlet 147 of temperature regulated compartment 140 under the force of gravity.

Temperature regulated compartment 140 may further include one or more movable gates 149 within temperature regulated compartment 140 for selectively limiting movement of beverage containers 200 towards outlet 147 so as to further inhibit beverage containers 200 from prematurely escaping temperature regulated compartment 140. A gate 149 may be positioned, for example, on a shelf 143 so as to inhibit the progress of a beverage container 200 along the shelf 143. As a beverage container 200 is dispensed, a gate 149 may be lowered so as to allow beverage containers 200 to progress towards outlet 147 of temperature regulated compartment 140, and once beverage containers 200 have progressed, gate 149 can be raised to inhibit further movement. In some embodiments, movement of gate 149 and other operations of slush beverage dispenser 100 may be controlled by control unit 128.

In some embodiments, temperature regulated compartment 140 may be divided into a first zone 154 maintained at a first predetermined temperature and a second zone 155 maintained at a second predetermined temperature. In some embodiments, second zone 155 is arranged above first zone 154 so that a beverage container 200 inserted into temperature regulated compartment 140 first enters second zone 155 and as beverage container 200 moves along passageway 153, beverage container 200 will pass into first zone 154 where it may exit temperature regulated compartment 140 via outlet 147. In embodiments, first zone 154 is maintained at a first predetermined temperature and second zone 155 is maintained at a second predetermined temperature, and the temperature of the first zone is lower than the temperature of the second zone. First zone 154 is maintained at a first predetermined temperature that is at or below a freezing point of a beverage to be held within temperature regulated compartment 140. The second zone 155 is maintained at a temperature above the freezing point of the beverage in beverage container 200 stored within temperature regulated compartment 140. In one embodiment, second zone 155 is maintained at a temperature of about 0.1°C to about 24°C, or about 1°C to about 12°C. In this way, second zone 155 serves to lower the temperature of beverage containers 200 inserted into temperature regulated compartment 140 so that beverage containers 200, when moved from second zone 155 into first zone 154, will more rapidly reach the first predetermined temperature. Maintaining second zone 155 at a higher temperature than first zone 154 of temperature regulated compartment 140 helps to improve the energy efficiency of slush beverage dispenser 100 by eliminating the need to maintain the entire temperature regulated compartment 140 at the first predetermined temperature.

In embodiments, first zone 154 and second zone 155 of temperature regulated compartment 140 are separated by an insulated divider 156. Insulated divider 156 is formed in a similar manner as shelves 143 and may be substantially planar and sloped or inclined so as to form an angle with respect to a hypothetical horizontal axis X. In embodiments having an insulated divider 156, insulated divider 156 and shelves 143 define passageway 153 within temperature regulated compartment 140. Insulated divider 156 is configured to help maintain first zone 154 at the first predetermined temperature by inhibiting heat transfer into first zone 154. Insulated divider 156 differs from shelves 143 in that insulated divider 156 extends fully across the interior volume of temperature regulated compartment 140 from a first side 144 to an opposing second side 145 of temperature regulated compartment 140. To provide an insulating effect, insulated divider 156 may have a greater thickness than shelves 143, may be formed from a material having low thermal conductivity, and/or may have a double-walled construction.

Insulated divider 156 defines a divider opening 157 through which a beverage container 200 may pass from second zone 155 into first zone 154. Divider opening 157 may be removably covered by an insulated door 158 that is movable between an open configuration and a closed configuration. When insulated door 158 is in the closed configuration, insulated divider 156 and insulated door 158 provide a barrier between first and second zones 154, 155. Insulated door 158 may be biased towards the closed configuration to maintain first zone 154 at the first predetermined temperature. Insulated door 158 may be temporarily opened to allow a beverage container 200 to pass through divider opening 157 due to the weight of beverage container 200 on insulated door 158, and once beverage container 200 has passed through divider opening 157, insulated door 158 may automatically return to the closed configuration. Alternatively, in some embodiments, opening and closing of insulated door 158 may be controlled by control unit 128.

In some embodiments, temperature regulated compartment 140 further includes a counter 190 configured to track the number of beverage containers 200 within temperature regulated compartment 140. As best shown in FIG. 5, counter 190 includes a rotatable axle 192 that can rotate about its longitudinal axis, and a plurality of baffles 194 arranged perpendicularly to axle 192 and extending radially therefrom. Counter 190 may have three baffles 194 as shown in FIG. 5. However, in other embodiments, counter 190 may have additional or fewer baffles 194. Counter 190 is positioned such that a beverage container 200 must engage counter 190 to reach outlet 147 of temperature regulated compartment 140. In operation, as a beverage container 200 moves along passageway 153 within temperature regulated compartment 140, beverage container 200 will encounter a baffle 194 and the movement of beverage container 200 against baffle 194 causes counter 190 to rotate, such that the counter 190 functions as a turnstile. In this way, counter 190 can track the number of beverage containers 200 within temperature regulated compartment 140 based upon the number of rotations of counter 190. In some embodiments, counter 190 may further serve as a gate that inhibits progress of beverage containers 200 along passageway 153. When a beverage container 200 is dispensed, counter 190 may allow a beverage container 200 to progress along passageway 153. In some embodiments, counter 190 may be controlled by a control unit 128 so as to selectively allow counter 190 to rotate as beverage containers are dispensed. Further, if a beverage container 200 is dispensed from temperature regulated compartment 140, and counter 190 does not rotate within compartment 140 as the remaining beverage containers 200 move towards outlet 147, slush beverage dispenser 100 may need to be refilled with additional beverage containers 200.

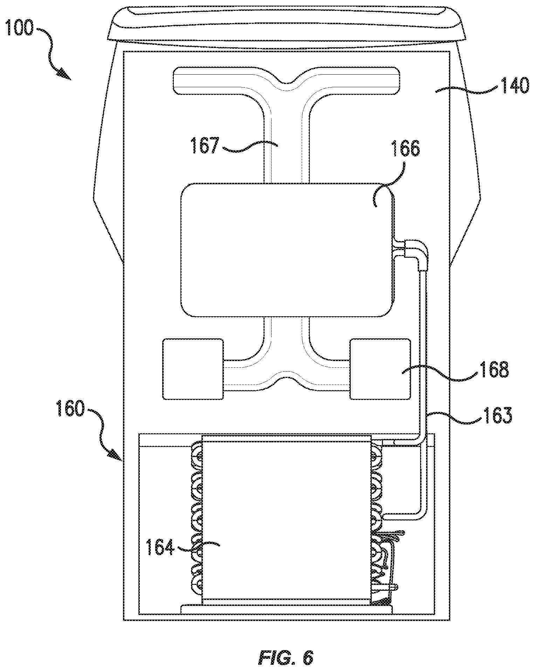

Slush beverage dispenser 100 further includes a cooling system 160, as shown for example in FIG. 6. Cooling system 160 is configured to maintain temperature regulated compartment 140 at a predetermined temperature. In embodiments in which temperature regulated compartment 140 includes a first zone and a second zone, cooling system 160 may be configured to maintain the first zone at the first predetermined temperature and the second zone at a second predetermined temperature. Further, in embodiments having multiple temperature regulated compartments 140, the cooling system 160 may be used to maintain the multiple temperature regulated compartments 140 at the same, or at different temperatures.

In some embodiments, the predetermined temperature of temperature regulated compartment 140 may be at or below the freezing point of a beverage to be stored within temperature regulated compartment 140. The predetermined temperature is selected so that the beverage remains in a liquid state, such that the beverage is supercooled and does not turn into a solid prematurely within temperature regulated compartment 140. A person having ordinary skill in the art will appreciate that the freezing point may differ from one beverage to another and can select an appropriate temperature accordingly. For example, the freezing point of a sweetened, carbonated beverage is generally lower than that of flat, purified water, and as a result temperature regulated compartment 140 may need to be maintained at a lower temperature if used to store a sweetened, carbonated beverage than if temperature regulated compartment 140 is used to store flat, purified water. In some embodiments, the predetermined temperature of temperature regulated compartment 140 may be from about -24°C to about -0.1°C, about -18°C to about -1°C, or about -12°C to about -2°C.

In embodiments, cooling system 160 comprises an evaporator 166 in communication with a compressor 162, a condenser 164 and an expansion valve (as best shown in FIG. 4) via a plurality of conduits 163 for circulating a refrigerant. Evaporator 166 supplies cooled air through ducts 167 to temperature regulated compartment 140. Temperature regulated compartment 140 may have vents 159 through which the cooled air can flow from ducts 167 and into temperature regulated compartment 140. Ducts 167 may further be connected to fans 168 for promoting circulation of cooled air through temperature regulated compartment 140. In some embodiments, cooling system 160 may include one or more temperature sensors positioned within temperature regulated compartment 140 to determine a temperature within compartment 140. Cooling system 160 may automatically adjust its operation to maintain temperature regulated compartment 140 at the predetermined temperature based on the reading of the temperature sensors. In alternate embodiments, other types of cooling systems 160 known in the art may be used so long as temperature regulated compartment 140 is maintained at a predetermined temperature as discussed herein.

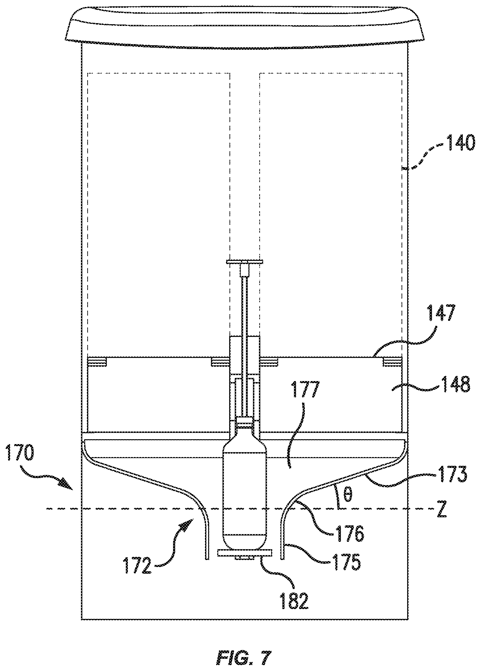

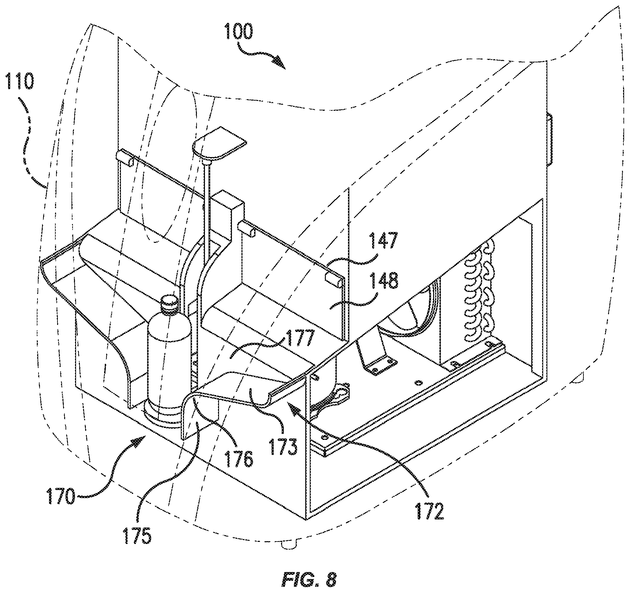

Slush beverage dispenser 100 further includes an agitator 170 configured to cause a beverage within a beverage container 200 to undergo nucleation, as shown in FIGs. 7-8. Agitator 170 is disposed at outlet 147 of temperature regulated compartment 140 of slush beverage dispenser 100. In some embodiments, upon receipt of a user input by slush beverage dispenser 100, a beverage container 200 is allowed to pass from temperature regulated compartment 140 through outlet 147 to agitator 170.

The beverages within beverage containers 200 in temperature regulated compartment 140 are stored at a temperature at or below the freezing point of the beverage in a supercooled state, and remain in liquid phase until agitated or disturbed. Agitator 170 is configured to subject a beverage container 200 to a mechanical impact to cause the beverage to undergo nucleation and begin a phase-change from a liquid to a solid or partial solid, *i.e.*, a slush. The mechanical impact is provided by a, particularly controlled, gravitational drop of beverage container 200 onto a platform. Alternatively, the mechanical impact can be provided by striking beverage container 200. Once the beverage within beverage container 200 is subjected to a mechanical impact, nucleation of the beverage begins to occur. Nucleation may occur more rapidly as the temperature of the liquid is decreased further below the freezing point. Thus, in some embodiments it is desirable to store the beverage at a temperature only slightly below the freezing point of the beverage, e.g., within 20°C of the freezing point, within 15°C of the freezing point, or within 10°C of the freezing point, so that nucleation occurs more gradually, enabling the consumer to witness nucleation of the beverage within the dispensed beverage container.

Agitator 170 is configured to cause a beverage container 200 to undergo a, particularly controlled, gravitational drop onto a platform 182. Agitator 170 includes a chute 172configured to subject the beverage container 200 to a gravitational drop onto a platform. Beverage container 200 can slide on the chute from outlet 147 of temperature regulated compartment 140 onto platform 182. In embodiments, chute 172 is formed in an interior portion of housing 110, and, in some embodiments, may be integrally molded with housing 110. The mechanical impact of beverage container 200 dropping onto platform 182 causes nucleation to occur. In embodiments, chute 172 has a smooth, continuous surface with a first portion 173 that is sloped or inclined relative to a hypothetical horizontal axis, Z, at an angle, *θ*, measured between the hypothetical horizontal axis, Z, and first portion 173 of chute 172. Chute 172 further includes a shoulder region 176 that is a rounded transition region connecting first portion 173 and second portion 175 of chute 172. Second portion 175 may be arranged substantially vertically, such that second portion 175 of chute 172 is perpendicular to the hypothetical horizontal axis, Z. First portion 173 of chute 172 may be inclined so as to guide beverage container 200 toward platform 182. In this way, a beverage container that exits temperature regulated compartment 140 rolls onto first portion 173 of chute 172 and slides on first portion 173 towards shoulder region 176, and upon reaching shoulder region 176 beverage container 200 drops under the force of gravity along second portion 175 and onto a platform 182. Chute 172 may be bound on a first side by a retaining wall 177 and by housing 110 on the opposing side of the chute 172 so that a beverage container 200 is retained on chute 172 and cannot move in an unanticipated or uncontrolled manner.

In some embodiments, it may be desirable to dispense a beverage container 200 in an upright orientation, such that a longitudinal axis of the beverage container is perpendicular to a surface on which the beverage container is positioned, as shown for example in FIG. 7. In such embodiments, chute 172 may be configured so as to reorient a beverage container 200 stored in a sideways orientation within temperature regulated compartment 140 into an upright or vertical orientation for presentation to a consumer.

In embodiments having two temperature regulated compartments 140, agitator 170 may include two chutes 172, with one chute 172 corresponding to each temperature regulated compartment 140. In such embodiments, chutes 172 may each be configured to subject a beverage container to a controlled gravitational drop onto a shared platform 182. Thus, as shown in FIG. 7, the two chutes 172 are mirror images of one another.

In an illustrative example, agitator 170 includes a striker that is configured to strike a beverage container 200 upon exiting outlet 147 of temperature regulated compartment 140. The striker is configured to subject a beverage container 200 to a mechanical impact by acting on a beverage container 200 which may be substantially stationary. The use of a striker allows beverage container 200 to be agitated without the need to drop or shake the beverage container 200. The striker may be in any of various forms, including a movable rod, bar, or hammer. The striker may be used to strike any of various portions of a beverage container 200 such as a sidewall, an upper end, or a lower end of beverage container 200. The striker subjects a beverage container 200 to a mechanical impact to cause nucleation of a beverage within beverage container 200. In some embodiments, the mechanical impact imparted by the striker is of a minimum sufficient force to cause a beverage within the beverage container to undergo nucleation so as to promote nucleation while also avoiding any damage to beverage container 200 or the striker that may result from striking beverage container 200. Operation of the striker may be controlled by a control unit 128 so as to strike a beverage container that has exited temperature regulated compartment 140.

Slush beverage dispenser 100 provides beverage container 200 to a consumer once beverage container 200 has been agitated. Thus, delivery portal 112 of housing 110 is operatively connected to agitator 170 so that a consumer can retrieve beverage container 200 directly from agitator 170, and specifically from platform 182. However, in some embodiments, delivery portal 112 may be located distant from agitator 170 and slush beverage dispenser 100 may further include a distributor 180 that moves a beverage container 200 from agitator 170 to delivery portal 112.

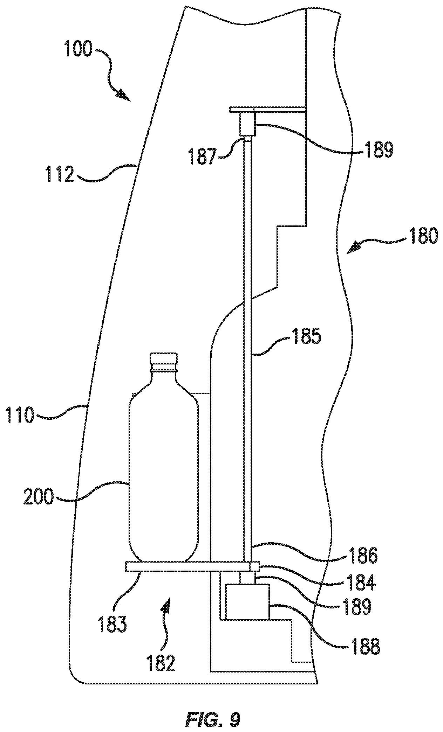

In some embodiments, slush beverage dispenser 100 may further include a distributor 180 for moving a beverage container 200 from agitator 170 to delivery portal 112, as shown in FIG. 9. Distributor 180 includes a movable platform 182 configured to move a beverage container 200 from agitator 170 to delivery portal 112. Distributor 180 may be useful to allow delivery portal 112 to be positioned on slush beverage dispenser 100 in a location that is easily accessible by a consumer and that allows the dispensed beverage to be easily viewed by the consumer. Further, distributor 180 may be used to improve the user-experience when using slush beverage dispenser 100 by presenting a beverage container 200 to the consumer in a particular manner.

In an embodiment, distributor 180 includes a movable platform 182 on which a beverage container 200 can be positioned for moving beverage container 200 to delivery portal 112. Movable platform 182 includes a support section 183 on which a beverage container 200 can be positioned, and a rod engagement section 184 that is movably connected to a guide rod 185. Guide rod 185 has a lower end 186 and an upper end 187 and is arranged vertically so that upper end 187 is positioned at an elevation above lower end 186. Movable platform 182 can move along guide rod 185 from lower end 186 toward upper end 187 for moving a beverage container 200 from agitator 170 to delivery portal 112. A stop 189 may be positioned at each of lower end 186 and upper end 187 of guide rod 185 so that movable platform 182 is restrained so as to be capable of movement only along guide rod 185. Movable platform 182 may be movable along guide rod 185 by means of a motor 188, and motor 188 may be controlled by control unit 128. Thus, in such embodiments, distributor 180 is configured to elevate a beverage container 200 from agitator 170 to delivery portal 112 where it can be retrieved by a consumer.

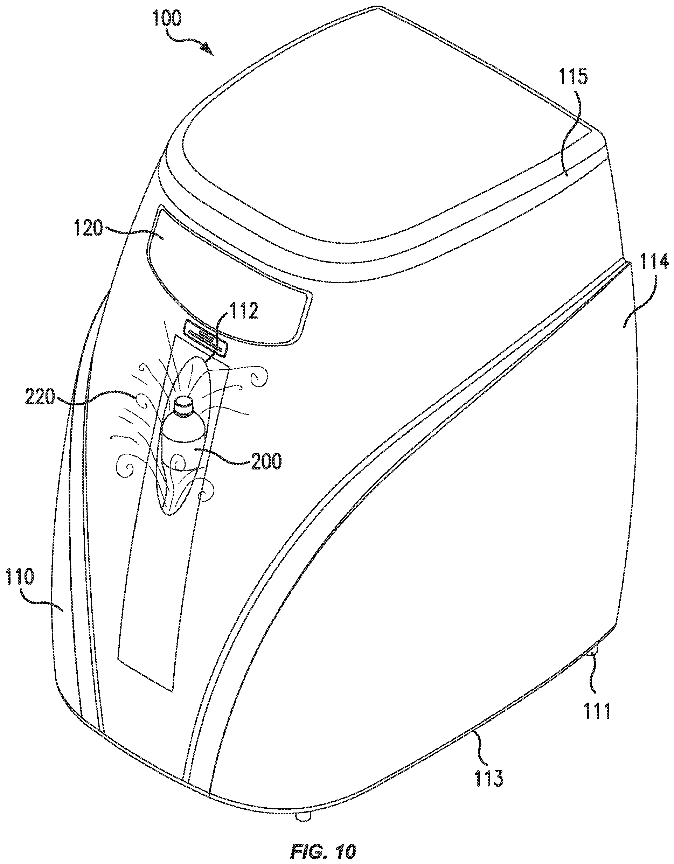

In some embodiments, slush beverage dispenser 100 may further be configured to provide a dispensing effect upon dispensing a beverage container 200 from the slush beverage dispenser 100, as shown in FIG. 10. In this way, slush beverage dispenser 100 provides a consumer with a unique experience upon dispensing a beverage container 200 from slush beverage dispenser 100. In an embodiment, slush beverage dispenser 100 is configured to dispense a mist 220 of water vapor through delivery portal 112 as a beverage container 200 reaches or moves to delivery portal 112. Slush beverage dispenser 100 may include an effects unit for providing a mist 220 of water vapor. Effects unit may include a selectively openable vent for releasing a mist 220. Mist 220 may be supplied via a duct 167 from cooling system 160 that is operably connected to effects unit for supplying a mist 220. In some embodiments, effects unit may include a sprayer adjacent to delivery portal 112 for supplying a mist 220 of water vapor that is cooled by air from temperature regulated compartment 140 or cooling system 160. The release of mist 220 by an effects unit through delivery portal 112 may be controlled by control unit 128 so that the release of mist 220 is coordinated with dispensing of a beverage container 200 via delivery portal 112 to provide a unique visual effect. In some embodiments, effects unit may be alternatively or additionally configured to provide a lighting effect, such as by illuminating delivery portal 112 with a particular color of light, providing light in changing or alternating colors, or flashing lights to indicate a beverage container is being dispensed. Further, effects unit may be used to provide an audio effect, such as by playing a sound or greeting.

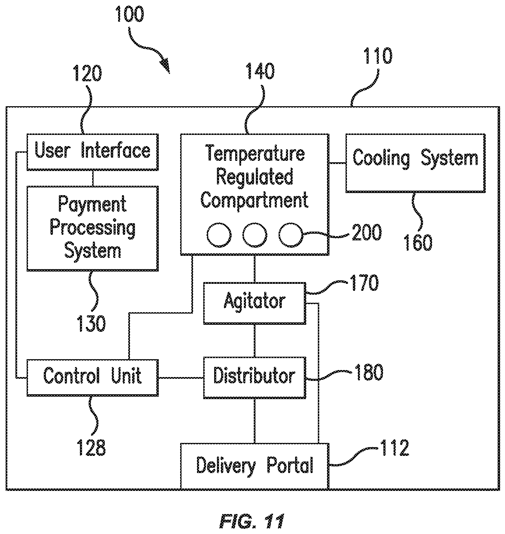

FIG. 11 shows a schematic diagram of the components of the slush beverage dispenser according to an embodiment. In an exemplary operation of a slush beverage dispenser 100 as described herein, a slush beverage dispenser 100 is provided with a user interface 120 and a payment processing system 130. User interface 120 displays the name, logo, or other information about the beverage containers stored within slush beverage dispenser 100. Slush beverage dispenser 100 may include a single temperature regulated compartment 140 in which a single type of beverage is held, and may further include one or more secondary temperature regulated compartments 140 each configured to store a different beverage. The beverage containers are stored within temperature regulated compartment(s) 140 at a predetermined temperature at or below a freezing point of the beverage so that the beverages are supercooled liquids. A cooling system 160 serves to maintain temperature regulated compartment 140 at the predetermined temperature.

The consumer utilizes user interface 120 to make a selection and can provide any required payment via payment processing system 130. Upon entering a consumer selection and any required payment, a beverage container corresponding to the consumer selection is allowed to exit temperature regulated compartment 140 positioned within housing 110. The beverage container released from temperature regulated compartment 140 is communicated to an agitator 170 which subjects the beverage container to a mechanical impact so as to cause nucleation of the beverage within the beverage container. Agitator 170 is operably connected to a delivery portal 112 so that the beverage container is accessible by the consumer. In some embodiments, a distributor 180 is further provided to move the beverage container from the agitator 170 to the delivery portal 112 for access by the consumer. In some embodiments, slush beverage dispenser 100 is further configured to release a mist of water vapor as the beverage container reaches or is moved to delivery portal 112 to provide a unique visual effect when dispensing a beverage container 200.

Slush beverage dispenser 100 may further include a control unit 128 and any necessary computer system and processing means including any hardware, software, and electronics for carrying out a dispensing operation according to the embodiments discussed herein. The embodiments described herein are not limited to a particular computer system for carrying out a dispensing operation, and a person having ordinary skill in the art would be able to readily implement the embodiments described herein using known computer and electronic components. A computer system may include a processor and a main memory, for example random access memory (RAM), for storing a computer program, such as operating software. The software can be executed via a user interface operably connected to the computer system. The computer system may include a communication interface for allowing software and data to be transferred between the computer system and external devices. The computer system may include a secondary memory. Upon receipt of a user input by the user interface, the processor of the computer system may carry out a dispensing operation of a beverage container from the temperature regulated compartment according to the operating software. The dispensing operation may include actuating electronics to temporarily open an outlet door of a temperature regulated compartment so that a beverage container may pass through the outlet. Further, the remaining beverage containers within the temperature regulated compartment may be allowed progress towards the outlet so that a subsequent beverage container is ready to be dispensed, such as by actuating electronics to temporarily open a gate or an insulated door on an insulated divider within the temperature regulated compartment to allow a beverage container to progress towards an outlet of a temperature regulated compartment. Additionally, in embodiments having a distributor, the computer system may selectively actuate a motor for moving a platform on which a beverage container is positioned from the agitator to the delivery portal for access by the user.

It is to be appreciated that the Detailed Description section, and not the Summary and Abstract sections, is intended to be used to interpret the claims. The Summary and Abstract sections may set forth one or more but not all exemplary embodiments of the present invention(s) as contemplated by the inventors, and thus, are not intended to limit the present invention(s) and the appended claims in any way.

The present invention(s) have been described above with the aid of functional building blocks illustrating the implementation of specified functions and relationships thereof. The boundaries of these functional building blocks have been arbitrarily defined herein for the convenience of the description. Alternate boundaries can be defined so long as the specified functions and relationships thereof are appropriately performed.

The foregoing description of the specific embodiments will so fully reveal the general nature of the invention(s) that others can, by applying knowledge within the skill of the art, readily modify and/or adapt for various applications such specific embodiments, without undue experimentation, and without departing from the general concept of the present invention(s). Therefore, such adaptations and modifications are intended to be within the meaning and range of equivalents of the disclosed embodiments, based on the teaching and guidance presented herein. It is to be understood that the phraseology or terminology herein is for the purpose of description and not of limitation, such that the terminology or phraseology of the present specification is to be interpreted by the skilled artisan in light of the teachings and guidance herein.

The breadth and scope of the present invention(s) should not be limited by any of the above-described exemplary embodiments, but should be defined only in accordance with the following claims

## Claims

1. A method for providing a slush beverage to a consumer, comprising:
storing in a temperature regulated compartment of a beverage dispenser (100) a beverage container (200) containing a beverage at a predetermined temperature at or below a freezing point of the beverage without consumer access to the beverage container (200);
receiving, by the beverage dispenser (100), a consumer selection for a beverage;
based on the consumer selection, agitating the beverage container (200) via an agitator (170) of the beverage dispenser (100) such that the beverage within the beverage container (200) undergoes nucleation to form a slush beverage, wherein agitating the beverage container (200) comprises subjecting the beverage container (200) to a gravitational drop onto a platform (182); and
providing the beverage container (200) to the consumer via a delivery portal (112) of the beverage dispenser (100) after agitating the beverage container (200).

2. The method of claim 1, further comprising storing the beverage container (200) in the temperature regulated compartment (140) at a temperature of -2°C to - 12°C.

3. The method of claim 1, wherein providing the beverage container (200) to the consumer comprises moving the beverage container (200) from the temperature regulated compartment (140) to an area exterior to the temperature regulated compartment (140) that is accessible by a consumer.

4. The method of claim 1, further comprising accepting a payment by a consumer prior to providing the beverage container (200) to the consumer.

5. A slush beverage dispenser (100), comprising:
a housing (110);
a temperature regulated compartment (140) within the housing (110) configured to store one or more beverage containers (200) such that the one or more beverage containers (200) are not accessible by a consumer, wherein the temperature regulated compartment (140) includes an inlet (141) and an outlet (147);
a cooling system (160) for maintaining the temperature regulated compartment (140) at a first predetermined temperature at or below a freezing point of a beverage within the one or more beverage containers (200);
a user interface (120) configured to receive a consumer selection of a beverage;
an agitator (170) disposed at the outlet (147) of the temperature regulated compartment (140), wherein the slush beverage dispenser (100) is configured such that, upon receipt of the consumer selection of the beverage via the user interface (120), a beverage container (200) corresponding to the consumer selection is released from the temperature regulated compartment (140) and is communicated to the agitator (170) of the beverage dispenser (100), wherein the agitator (170) comprises a chute (172) configured to subject the beverage container (200) to a gravitational drop onto a platform (182) to cause a beverage within the beverage container (200) to undergo nucleation; and
a delivery portal (112) operatively connected to the agitator (170) for providing the beverage container (200) to the consumer.

6. The dispenser of claim 5, wherein the first predetermined temperature is -2°C to -12°C.

7. The dispenser (100) of claim 5, wherein the temperature regulated compartment (140) comprises a passageway (153) configured to sequentially guide one or more beverage containers (200) from the inlet to the outlet of the temperature regulated compartment (140), wherein the passageway (153) is defined by a plurality of shelves (143) that are spaced from one another.

8. The dispenser (100) of claim 5, further comprising a counter (190) within the temperature regulated compartment (140) for tracking a quantity of beverage containers (200) held within the temperature regulated compartment (140).

9. The dispenser (100) of claim 5, wherein the temperature regulated compartment (140) comprises a first zone (154) maintained at the first predetermined temperature, and a second zone (155) maintained at a second predetermined temperature, wherein the first predetermined temperature is lower than the second predetermined temperature.

10. The dispenser (100) of claim 9, wherein the first zone (154) and the second zone (155) of the temperature regulated compartment (140) are separated by an insulated divider (156).

11. The dispenser (100) of claim 5, wherein the housing (110) comprises a base (113), one or more sidewalls (114), and an upper wall (115), defining an interior volume in which the temperature regulated compartment (140) is positioned, and wherein the delivery portal (112) is positioned on the one or more sidewalls (114).

12. The dispenser (100) of claim 11, wherein the upper wall (115) of the housing (110) comprises a selectively openable lid (119) movable between an open configuration and a closed configuration, such that the inlet of the temperature regulated compartment (140) is accessible when the selectively openable lid (119) is in an open configuration and the inlet is inaccessible when the selectively openable lid (110) is in a closed configuration.

13. The dispenser (100) of claim 5, wherein the chute (172) comprises a first portion (173) that is inclined relative to a horizontal axis, a second portion (175) that is arranged perpendicularly to the horizontal axis, and a shoulder region (176) that is rounded and connects the first portion (173) to the second portion (175).

14. The dispenser (100) of claim 5, further comprising a secondary temperature regulated compartment (140) within the housing (110) that is configured to store one or more beverage containers (200) such that the one or more beverage containers (200) are not accessible by a consumer.

## Patentansprüche

1. Verfahren zum Bereitstellen eines Slush-Getränks für einen Verbraucher, wobei das Verfahren umfasst:
Lagern, in einem temperaturgeregelten Fach eines Getränkespenders (100), eines Getränkebehälters (200), der ein Getränk enthält, bei einer zuvor festgelegten Temperatur auf oder unter einem Gefrierpunkt des Getränks, ohne dass ein Verbraucher Zugang zu dem Getränkebehälter (200) hat;
Empfangen, durch den Getränkespender (100), einer Auswahl eines Verbrauchers für ein Getränk;
auf der Grundlage der Verbraucherauswahl, Rühren des Getränkebehälters (200) über ein Rührwerk (170) des Getränkespenders (100) so, dass in dem Getränk innerhalb des Getränkebehälters (200) eine Keimbildung stattfindet, um ein Slush-Getränk zu bilden, wobei das Rühren des Getränkebehälters (200) umfasst, dass der Getränkebehälter (200) durch Schwerkraft auf eine Plattform (182) fällt; und Bereitstellen des Getränkebehälters (200) an den Verbraucher über ein Ausgabeportal (112) des Getränkespenders (100) nach dem Rühren des Getränkebehälters (200).

2. Verfahren nach Anspruch 1, des Weiteren umfassend das Lagern des Getränkebehälters (200) in dem temperaturgeregelten Fach (140) bei einer Temperatur von -2 °C bis -12 °C.

3. Verfahren nach Anspruch 1, wobei das Bereitstellen des Getränkebehälters (200) an den Verbraucher das Bewegen des Getränkebehälters (200) aus dem temperaturgeregelten Fach (140) in einen Bereich außerhalb des temperaturgeregelten Fachs (140), der für einen Verbraucher zugänglich ist, umfasst.

4. Verfahren nach Anspruch 1, des Weiteren umfassend das Entgegennehmen einer Zahlung durch einen Verbraucher vor dem Bereitstellen des Getränkebehälters (200) an den Verbraucher.

5. Slush-Getränkespender (100), umfassend:
ein Gehäuse (110),
ein temperaturgeregeltes Fach (140) innerhalb des Gehäuses (110), das dafür eingerichtet ist, einen oder mehrere Getränkebehälter (200) so zu lagern, dass der eine oder die mehreren Getränkebehälter (200) für einen Verbraucher nicht zugänglich sind, wobei das temperaturgeregelte Fach (140) einen Einlass (141) und einen Auslass (147) aufweist;
ein Kühlsystem (160) zum Halten des temperaturgeregelten Fachs (140) auf einer ersten zuvor festgelegten Temperatur auf oder unter einem Gefrierpunkt eines Getränks innerhalb des einen oder der mehreren Getränkebehälter (200);
eine Benutzerschnittstelle (120), die dafür eingerichtet ist, eine Verbraucherauswahl eines Getränks zu empfangen;
ein Rührwerk (170), das an dem Auslass (147) des temperaturgeregelten Fachs (140) angeordnet ist, wobei der Slush-Getränkespender (100) so eingerichtet ist, dass, bei Empfang der Verbraucherauswahl des Getränks über die Benutzerschnittstelle (120), ein Getränkebehälter (200), der der Verbraucherauswahl entspricht, aus dem temperaturgeregelten Fach (140) freigegeben und dem Rührwerk (170) des Getränkespenders (100) zugeführt wird, wobei das Rührwerk (170) eine Rutsche (172) umfasst, die dafür eingerichtet ist, den Getränkebehälter (200) durch Schwerkraft auf eine Plattform (182) fallen zu lassen, um zu bewirken, dass ein Getränk innerhalb des Getränkebehälters (200) eine Keimbildung durchläuft; und
ein Abgabeportal (112), das mit dem Rührwerk (170) wirkverbunden ist, um den Getränkebehälter (200) an den Verbraucher bereitzustellen.

6. Spender nach Anspruch 5, wobei die erste zuvor festgelegte Temperatur -2 °C bis -12 °C beträgt.

7. Spender (100) nach Anspruch 5, wobei das temperaturgeregelte Fach (140) einen Durchgang (153) umfasst, der dafür eingerichtet ist, einen oder mehrere Getränkebehälter (200) nacheinander von dem Einlass zu dem Auslass des temperaturgeregelten Fachs (140) zu führen, wobei der Durchgang (153) durch mehrere Regalen (143) definiert wird, die voneinander beabstandet sind.

8. Spender (100) nach Anspruch 5, des Weiteren umfassend einen Zähler (190) innerhalb des temperaturgeregelten Fachs (140) zum Verfolgen einer Anzahl von Getränkebehältern (200), die innerhalb des temperaturgeregelten Fachs (140) gehalten werden.

9. Spender (100) nach Anspruch 5, wobei das temperaturgeregelte Fach (140) eine erste Zone (154), die auf der ersten zuvor festgelegten Temperatur gehalten wird, und eine zweite Zone (155), die auf einer zweiten zuvor festgelegten Temperatur gehalten wird, umfasst, wobei die erste zuvor festgelegte Temperatur niedriger ist als die zweite zuvor festgelegte Temperatur.

10. Spender (100) nach Anspruch 9, wobei die erste Zone (154) und die zweite Zone (155) des temperaturgeregelten Fachs (140) durch eine isolierte Trennwand (156) getrennt sind.

11. Spender (100) nach Anspruch 5, wobei das Gehäuse (110) eine Basis (113), eine oder mehrere Seitenwände (114) und eine obere Wand (115) umfasst, die ein Innenvolumen definieren, in dem das temperaturgeregelte Fach (140) positioniert ist, und wobei das Ausgabeportal (112) an der einen oder den mehreren Seitenwänden (114) positioniert ist.

12. Spender (100) nach Anspruch 11, wobei die obere Wand (115) des Gehäuses (110) einen selektiv öffnungsfähigen Deckel (119) umfasst, der zwischen einer offenen Konfiguration und einer geschlossenen Konfiguration beweglich ist, dergestalt, dass der Einlass des temperaturgeregelten Fachs (140) zugänglich ist, wenn sich der selektiv öffnungsfähige Deckel (119) in einer offenen Konfiguration befindet, und der Einlass unzugänglich ist, wenn sich der selektiv öffnungsfähige Deckel (110) in einer geschlossenen Konfiguration befindet.

13. Spender (100) nach Anspruch 5, wobei die Rutsche (172) umfasst: einen ersten Abschnitt (173), der relativ zu einer horizontalen Achse geneigt ist, einen zweiten Abschnitt (175), der senkrecht zu der horizontalen Achse angeordnet ist, und eine Schulterregion (176), die gerundet ist und den ersten Abschnitt (173) mit dem zweiten Abschnitt (175) verbindet.

14. Spender (100) nach Anspruch 5, des Weiteren umfassend ein sekundäres temperaturgeregeltes Fach (140) innerhalb des Gehäuses (110), das dafür eingerichtet ist, einen oder mehrere Getränkebehälter (200) so zu lagern, dass der eine oder die mehreren Getränkebehälter (200) für einen Verbraucher nicht zugänglich sind.

## Revendications

1. Procédé destiné à fournir un granité à un consommateur, comprenant de :
stocker dans un compartiment à température régulée d'un distributeur de boisson (100) un récipient de boisson (200) contenant une boisson à une température prédéterminée égale ou inférieure à un point de congélation de la boisson sans accès du consommateur au récipient de boisson (200) ;
recevoir, par le distributeur de boisson (100), une sélection de consommateur concernant une boisson ;
sur la base de la sélection de consommateur, agiter le récipient de boisson (200) via un agitateur (170) du distributeur de boisson (100) de telle sorte que la boisson à l'intérieur du récipient de boisson (200) subit une nucléation pour former un granité, dans lequel l'agitation du récipient de boisson (200) comprend de soumettre le récipient de boisson (200) à une chute par gravitation sur une plate-forme (182) ; et
fournir le récipient de boisson (200) au consommateur via un portail de distribution (112) du distributeur de boisson (100) après l'agitation du récipient de boisson (200) .

2. Procédé selon la revendication 1, comprenant en outre de stocker le récipient de boisson (200) dans le compartiment à température régulée (140) à une température de -2 °C à -12 °C.

3. Procédé selon la revendication 1, dans lequel la fourniture du récipient de boisson (200) au consommateur comprend de déplacer le récipient de boisson (200) depuis le compartiment à température régulée (140) jusqu'à une zone extérieure au compartiment à température régulée (140) qui est accessible à un consommateur.

4. Procédé selon la revendication 1, comprenant en outre d'accepter un paiement par un consommateur avant de fournir le récipient de boisson (200) au consommateur.

5. Distributeur de granité (100), comprenant :
un boîtier (110) ;
un compartiment à température régulée (140) à l'intérieur du boîtier (110) configuré pour stocker un ou plusieurs récipients de boisson (200) de telle sorte que le ou les récipients de boisson (200) ne sont pas accessibles à un consommateur, dans lequel le compartiment à température régulée (140) comporte une entrée (141) et une sortie (147) ;
un système de refroidissement (160) pour maintenir le compartiment à température régulée (140) à une première température prédéterminée égale ou inférieure à un point de congélation d'une boisson à l'intérieur du ou des récipients de boisson (200) ;
une interface utilisateur (120) configurée pour recevoir une sélection de consommateur concernant une boisson ;
un agitateur (170) disposé à la sortie (147) du compartiment à température régulée (140), dans lequel le distributeur de granité (100) est configuré de telle sorte que, à réception de la sélection de consommateur concernant la boisson via l'interface utilisateur (120), un récipient de boisson (200) correspondant à la sélection de consommateur est libéré du compartiment à température régulée (140) et est transféré vers l'agitateur (170) du distributeur de boisson (100), dans lequel l'agitateur (170) comprend une glissière (172) configurée pour soumettre le récipient de boisson (200) à une chute par gravitation sur une plate-forme (182) afin d'amener une boisson à l'intérieur du récipient de boisson (200) à subir une nucléation ; et
un portail de distribution (112) relié de manière opérationnelle à l'agitateur (170) pour fournir le récipient de boisson (200) au consommateur.

6. Distributeur selon la revendication 5, dans lequel la première température prédéterminée est de -2 °C à -12 °C.

7. Distributeur (100) selon la revendication 5, dans lequel le compartiment à température régulée (140) comprend une voie de passage (153) configurée pour guider séquentiellement un ou plusieurs récipients de boisson (200) de l'entrée à la sortie du compartiment à température régulée (140), dans lequel la voie de passage (153) est définie par une pluralité de tablettes (143) qui sont espacées les unes des autres.

8. Distributeur (100) selon la revendication 5, comprenant en outre un compteur (190) à l'intérieur du compartiment à température régulée (140) pour suivre une quantité de récipients de boisson (200) conservés à l'intérieur du compartiment à température régulée (140).

9. Distributeur (100) selon la revendication 5, dans lequel le compartiment à température régulée (140) comprend une première zone (154) maintenue à la première température prédéterminée, et une seconde zone (155) maintenue à une seconde température prédéterminée, dans lequel la première température prédéterminée est inférieure à la seconde température prédéterminée.

10. Distributeur (100) selon la revendication 9, dans lequel la première zone (154) et la seconde zone (155) du compartiment à température régulée (140) sont séparées par un séparateur isolé (156).

11. Distributeur (100) selon la revendication 5, dans lequel le boîtier (110) comprend une base (113), une ou plusieurs parois latérales (114) et une paroi supérieure (115), définissant un volume intérieur dans lequel le compartiment à température régulée (140) est positionné, et dans lequel le portail de distribution (112) est positionné sur la ou les parois latérales (114).

12. Distributeur (100) selon la revendication 11, dans lequel la paroi supérieure (115) du boîtier (110) comprend un couvercle (119) pouvant être ouvert sélectivement et mobile entre une configuration ouverte et une configuration fermée, de telle sorte que l'entrée du compartiment à température régulée (140) est accessible lorsque le couvercle (119) pouvant être ouvert sélectivement est dans une configuration ouverte et l'entrée est inaccessible lorsque le couvercle (110) pouvant être ouvert sélectivement est dans une configuration fermée.

13. Distributeur (100) selon la revendication 5, dans lequel la glissière (172) comprend une première partie (173) qui est inclinée par rapport à un axe horizontal, une seconde partie (175) qui est agencée perpendiculairement à l'axe horizontal, et une région d'épaulement (176) qui est arrondie et relie la première partie (173) à la seconde partie (175).

14. Distributeur (100) selon la revendication 5, comprenant en outre un compartiment secondaire régulé en température (140) à l'intérieur du boîtier (110) qui est configuré pour stocker un ou plusieurs récipients de boisson (200) de telle sorte que le ou les récipients de boisson (200) ne sont pas accessibles à un consommateur.
